Europäisches Patentamt

European Patent Office

Office européen des brevets

(11) Publication number: **0 453 831 A2**

# EUROPEAN PATENT APPLICATION

(21) Application number: 91105303.1

(22) Date of filing: 04.04.91

(51) Int. Cl.⁵: **H04M 3/42**, H04Q 3/42, H04Q 3/70, H04M 3/50

(30) Priority: 05.04.90 US 505871

(43) Date of publication of application: 30.10.91 Bulletin 91/44

(84) Designated Contracting States: CH DE FR GB IT LI NL SE

(71) Applicant: TEXAS INSTRUMENTS INCORPORATED 13500 North Central Expressway Dallas Texas 75265(US)

(72) Inventor: Mathes, Connie M. 6909 Custer Road, Apt. No. 307 Plano, Texas 75023(US) Inventor: Deffner, Gerhard 9221 Amberton Pkwy Unit 209 Dallas, Texas 75243(US)

Inventor: Shu, Jan-Ping 905 Sandhurst Drive Plano, Texas 75025(US) Inventor: McMahan, Michael L. 3817 Merriman Drive Plano, Texas 75074(US) Inventor: Scruggs, Jeffrey L. 1534 Spring Aire Lane Lewisville, Texas 75067(US) Inventor: Harrison, Herman W. 4012 Riverview Plano, Texas 75023(US)

(74) Representative: Leiser, Gottfried, Dipl.-Ing. et al Patentanwälte Prinz, Leiser, Bunke & Partner Manzingerweg 7 W-8000 München 60(DE)

(54) User interfaces for telecommunications based services.

(57) A telecommunications system and method for providing voice activated dealing by callers is shown including authorizing a caller's access to the system, requesting voice entry of a phrase indicative of the caller's destination, recognizing the entered phrase as being indicative of a particular destination for the caller, and connecting the caller to the destination corresponding to the entered phrase for that caller.

Other systems and methods are also disclosed.

FIG. 1

## CROSS-REFERENCE TO RELATED APPLICATIONS

This application is related to the following applications assigned to the assignee of this application, filed concurrently herewith and which are hereby incorporated by reference as if fully set forth herein:
Application Serial Number 505,855 entitled
"Enhanced Services Platform for Telecommunications Systems";
Application Serial Number 505,747 entitled
"Method and Apparatus for Providing Integrated Access to Telecommunication Based Services";
Application Serial Number 505,870 entitled
"Call Delivery Telecommunications Service"; and
Application Serial Number 507,076 entitled
"Method and Apparatus for Securing Access to Telecommunications Based Assets and Services".

## FIELD OF THE INVENTION

The present invention relates generally to telecommunications systems providing enhanced voice and data services, and specifically to user interfaces for such services.

## BACKGROUND OF THE INVENTION

The telecommunications industry has experienced significant changes over recent years. More and more services are now being offered to customers which can be accessed via existing, or in some cases new and dedicated, telecommunications networks. The variety of services now available reflects the competitive nature of the marketplace as well as the advent of new technologies. Telecommunications service providers are offering their customers a plurality of enhanced services designed to increase revenue and expand the utility of telephone instruments. Telecommunications customers via their telephone can now access databases, bank accounts, securities accounts, messaging systems and various other services in addition to long distance telephone service.

Access to these services generally is controlled through the use of authorization codes assigned to users of the services. When a customer desires access to a particular service to which he or she has subscribed, the authorization code must be entered, usually via the touchtone pad on the telephone instrument, before access is granted. Alternatively, certain telephone equipment may permit the entry of the authorization code by passing a card similar to a credit card through a magnetic card reader which detects and transmits the authorization code over the telephone lines thus allowing the customer to avoid entering the code by hand.

One drawback with these methods of authorizing access to a telecommunications service is that anyone with access to a legitimate authorization code can access the service, thereby presenting a serious security problem. This problem is not unique to any particular sequence of steps for accessing the service, since the authorization code is subject to being lost or stolen. If, for example, a subscriber loses the authorization code, or has it stolen, the system can be accessed by an unauthorized subscriber until the authorization code is canceled. In the interim, unauthorized services can result in substantial financial losses to the subscriber and/or the telecommunications service provider. Also, the subscriber is required to enroll once again to access the service. A new authorization code must be issued to the subscriber, and typically a new authorization or subscriber identification card must be created and sent to the subscriber for future use. The subscriber, therefore, is put in the position of having to become accustomed to using a different and unfamiliar authorization code. The subscriber essentially enrolls as a user of the system once again. These enrollment procedures are significantly different than the procedures a subscriber uses to access and use the system on a regular basis. The experience can be extremely frustrating for subscribers, and potentially detrimental to service providers who are dependent upon customer satisfaction for expansion of their services.

Some telecommunications services, such as long distance calling for example, are accessed using a dialing sequence which generally requires that the caller first access the service and then seek authorization to proceed. For example, the current industry standard dial plan for long distance calling card service access requires a subscriber to first access the service by dialing a "0" followed by the 10-digit destination number which the subscriber is calling. The system then prompts the subscriber to enter his or her authorization code which typically is a 14-digit number similar to a credit card number. If the authorization code is recognized by the system as valid, service access is authorized and the call is completed. No commonly available dialing plan supports the opposite dialing sequence, i.e., entry of the authorization code before entry of the destination number, and no currently available service using any dial plan incorporates the caller's voice as a system access security mechanism.

One problem associated with the dialing sequence such as that employed in connection with long distance calling is that since every caller is required to attempt to access the service by entering a 10-digit destination number before authorization is granted, significant call hold time is wasted for those callers who fail the authorization step for one reason or another. The hold time is expensive and does not produce revenue for the telecommunications service provider since charges are made only for the time the caller is connected to the destination number. The result is an inefficient use of the service provider's assets.

Methods and apparatus for securing access to telecommunication based services have been developed, such as that disclosed in the aforementioned U.S. Patent Application S.N. 507,076. However, if a subscriber to a variety of services desires to access more than one service in succession, the subscriber generally must attempt to access, and obtain authorization for, each service separately. When the subscriber is finished using one service such as a database, for example, and then desires to access another service such as a bank account, for example, a renewed attempt to access the second service must be initiated. Additionally, the subscriber's attempt to contact the second service typically requires that the process of accessing the service utilize a separate and different access number, and/or a distinct authorization code. If a subscriber desires access to a wide variety of enhanced services, he or she typically has an equally wide variety of authorization and access codes to remember and protect from unauthorized use. Such complexity promotes confusion, and may perhaps deter a subscriber's use of such services.

Access to a wide variety of enhanced telecommunications based services can be accomplished in many ways. Voice verification technology such as that disclosed in U.S. Patent Application S.N. 350,060, which is hereby incorporated herein by reference, can be utilized to provide a method of securing access to telecommunication based services such as, for example, voice messaging, virtual private networks, long distance calling services, call delivery systems, personal banking or securities services, and a variety of database services.

As more enhanced services become available and are offered by telecommunications based service providers there will be an increased need for procedures which allow a uniform, integrated method of efficiently accessing a plurality of such services.

Voice messaging, for example, allows subscribers to manage their telephone in a more efficient manner. A subscriber rents a "mailbox" which is used to collect messages, similar to an answering machine. But the voice messaging system adds additional services beyond what an answering machine provides. These enhancements include the ability to accept more than one message at a time;

messages can be stored, forwarded, replied to; messages can be "mailed" to a group; and the subscriber can also customize their mailbox with personal greeting messages.

## SUMMARY OF THE INVENTION

One object of the present invention is to provide a user interface for use in connection with telecommunications based services.

Another object of the present invention is to provide a telecommunications based user interface for enhanced services which can be customized to the particular needs of the user.

Another object of the present invention is to provide a user interface which can be utilized in a telecommunications based services network including speaker independent voice recognition of user commands.

Another object of the present invention is to provide a user interface which can be incorporated into a system for securing access to a network offering a plurality of telecommunications based services.

Another object of the present invention is to provide a method of using telecommunications based services incorporating identification of authorized subscribers using voice verification.

Another object of the present invention is to provide a method of providing voice commands in a telecommunications based service network.

Another object of the present invention is to provide a speed dialing telecommunications system in which generic speaker independent destinations are used.

Another object of the present invention is to provide a speed dialing telecommunications system in which access to the system is part of a network of a plurality of telecommunications services.

Another object of the present invention is to provide a telecommunications architecture capable of using network based subscriber dependent speed dialing for commonly used phone numbers which may include the ability to modify those numbers through an interactive on line dialog.

Another object of the present invention is to provide a telecommunications architecture using speaker independent voice access to generic speed dialing numbers.

Another object of the present invention is to provide a voice messaging telecommunications system in which alternative user interface methods can be used to implement the messaging system.

Another object of the present invention is to provide a voice messaging system in which speaker independent commands are used.

Another object of the present invention is to provide a voice messaging system in which a speaker dependent repertory dialer is utilized.

The present invention includes a method of providing voice activated commands for use by callers in a telecommunications based service network, including the steps of: authorizing a caller's access to the network; requesting voice entry of a phrase indicative of the desired command; and executing the command corresponding to the entered phrase for that caller. The phrase preferably is speaker independent to allow a portion of a template of the subscriber's voice sample to include the commands associated with the phrase in question.

The preferred embodiment includes as the step authorizing access to the system the steps of: acknowledging an attempt by a caller to use the system; requesting voice entry of a phrase indicative of the desired command; requesting entry of an authorization code; requesting voice entry of a password; verifying the identity of the caller based on the caller's voice; and allowing access to the system if the caller's identity is verified as being that of a valid subscriber to the system.

The telecommunications system of the present invention includes means for authorizing a caller's access to the system; means for requesting voice entry of a phrase indicative of the desired command; means for recognizing the entered phrase as being indicative of a particular command for the caller; and means for executing the desired command corresponding to the entered phrase for that caller. Preferably the means for authorizing access to the system by a caller includes: means for acknowledging an attempt by a caller to use the network; means for requesting entry of the caller's command; means for requesting voice entry by the caller of an authorization code; means for verifying the identity of the caller based on the caller's voice entry of the caller's authorization code; and means for allowing access to the system if the caller's identity is verified as being that of a valid subscriber to the system.

## BRIEF DESCRIPTION OF THE DRAWINGS

The present invention will be described with reference to the accompanying drawings, wherein:

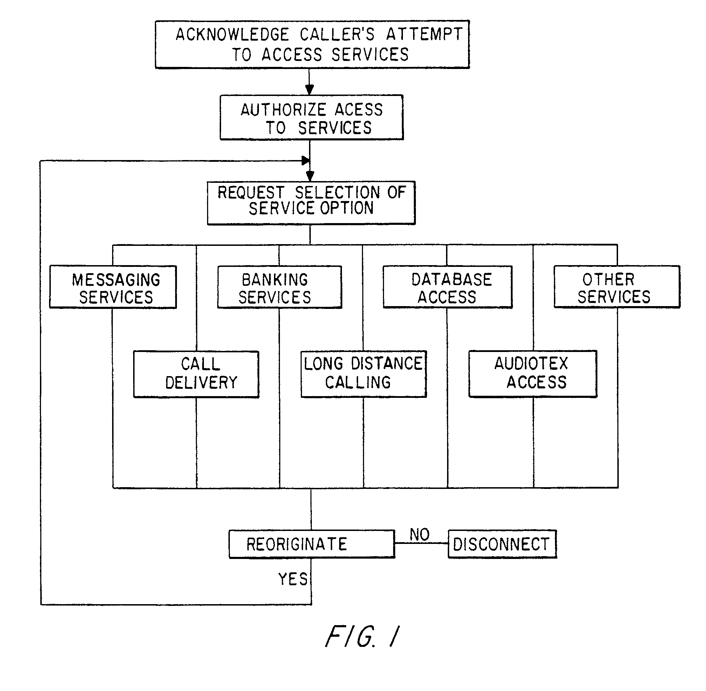

Figure 1 is a flow chart showing the preferred method of authorizing access to a telecommunications system incorporating the present invention.

## DESCRIPTION OF THE PREFERRED EMBODIMENT

The present invention will be discussed in connection with the apparatus and methods disclosed in the above mentioned co-pending, co-assigned applications which have been incorporated by reference herein. It should be understood, however, that the present invention is not so restricted and can be utilized in any telecommunications based service network in which speaker independent voice recognition capability is present, or can be implemented.

The preferred method of authorizing access to a system incorporating the present invention is shown in the flow chart of Figure 1. As shown, the first step in the method is acknowledging an attempt by a caller to access the network. Acknowledgment may or may not include an audible response to the caller such as a tone or a prerecorded statement indicating that the caller has contacted the network, although some indication to the caller preferably is included.

The caller then undergoes an identification process which may include entry via the keypad of an authorization code, or preferably, via an identification process using the caller's voice, such as the method and apparatus disclosed in U.S. Patent Application S.N. 507,076, which has been incorporated herein by reference. If the caller is identified as an authorized subscriber to the service, or services, access to the service(s) is granted and the caller is connected to the appropriate service.

The next step in the method is to request that the caller select the service or group of services to which access is being sought. This can be accomplished by the caller entering via the telephone keypad a digit, or digits, indicative of the particular service desired, or an appropriate voice command which can be interpreted using speaker independent or dependent voice recognition technology. The commands which the method of the present invention will accept can be designated to all users of the system and identified in speaker independent templates. When the caller says one of the appropriate commands, the command is interpreted and executed to connect the caller with the desired service. Alternatively, user specific voice commands can be utilized to allow users of the system to design their own service selection commands through interactive training sessions in which the user defines and trains the system to perform certain operations in response to specific commands.

In accordance with the present invention, upon completion of the caller's use of a particular service, the caller is prompted as to whether or not access to another of the offered services is desired. The present invention is capable of utilizing many different methods of prompting the user to determine whether or not access to other services is desired. The prompt may be a simple tone indicative of the prompt, or in keeping with one overall aspect of the invention, the prompt may include a prerecorded voice message asking the user whether or not access to additional services is desired. If the caller wishes to utilize another of the services, the command to do so is entered via the keypad or voice command as was done for the indication of the initial service. The process can continue as the subscriber wishes to use additional services available. It should be noted that the caller is not required to undergo separate identification procedures before accessing additional services within the network. The caller's identity is verified only once when initially obtaining access to the services being offered. There is thus provided a method and apparatus for integrated access to a plurality of telecommunication based services.

While the present invention can be implemented in a wide variety of physical embodiments or architectures, it is preferred that the enhanced services platform disclosed in U.S. Patent Application S.N. 505,855, which has been incorporated herein by reference, be utilized. The enhanced services platform disclosed therein has been designed to provide a common platform for network based delivery of a wide variety of enhanced services including, without limitation, long distance calling services, voice messaging, and call delivery services. Additionally, the present invention is capable of being used to incorporate new technologies as they become available.

The caller's voice commands can be utilized as part of a voice messaging system in accordance with the present invention. According to the present invention, the caller may utilize voice commands to direct calls to specific destinations. The template created for the caller's voice sample may also include specific destinations to be contacted in response to the caller's voice commands. For example, a specific destination can be defined for contact in response to a caller's voice command of "Call Home", or some other similar designated command. Similarly, the template can be defined to contact the caller's office in response to another voice command, such as "Call Office". Several such predesignated destinations can be made available to caller's generally using speaker independent voice recognition of the designated commands. A caller using the system of the present invention need only say the designated voice command to be connected to the particular destination rather than manually dialing the destination.

The present invention also can be utilized to create a library of speaker dependent voice commands which are recognized by the system using the speaker dependent voice recognition available in the system. A caller therefore may create a personalized listing of voice commands for frequently contacted destinations. This feature also can be utilized in connection with a voice messaging system in which, for example, the caller desires to create specified distribution lists to which certain types of messages are to be forwarded. It also is possible for the caller to create personalized commands which direct the system to carry out a specified sequence of operations without requiring the caller to enter each voice command every time the desired sequence of operations is necessary. An example of this aspect of the present invention could be a voice command of "Travel Check-in". This command might direct the system to first check the caller's message center for any messages to be delivered. Then, after the messages are dealt with by the caller, the system would contact the caller's office without requiring the caller to enter the voice command specifically directing the system to do so. It should be apparent that additional commands could be included in one such general command depending upon the particular needs of the caller.

The interactive user interface of the present invention is as flexible as necessary to accommodate a wide variety of system features which may be incorporated into a telecommunications system utilizing voice recognition technologies as they exist, or as they become available.

## Claims

1. A method of providing voice activated dialing by callers in a telecommunications system, comprising the steps of:
   authorizing a caller's access to the system;
   requesting voice entry of a phrase indicative of the caller's destination;
   recognizing the entered phrase as being indicative of a particular destination for the caller;
   connecting the caller to the destination corresponding to the entered phrase for that caller.

2. The method of providing voice activated dialing by callers in a telecommunications system as defined in Claim 1, wherein said phrase is caller independent.

3. The method of providing voice activated dialing by callers in a telecommunications system as defined in Claim 2, wherein said recognizing step comprises the steps of:
   comparing the entered phrase to a stored sample of that phrase for that caller; and
   translating said recognized phrase into the destination corresponding to said recognized phrase.

4. The method of providing voice activated dialing by callers in a telecommunications systems as defined in Claim 1, wherein said authorizing step comprises the steps of:

acknowledging an attempt by a caller to use the system;

requesting voice entry of a phrase indicative of the destination number;

requesting entry of an authorization code;

requesting voice entry of a password;

verifying the identity of the caller based on the caller's voice;

allowing access to the system if the caller's identity is verified as being that of a valid subscriber to the system.

5. A telecommunications system, comprising:

means for authorizing a caller's access to the system;

means for requesting voice entry of a phrase indicative of the destination number;

means for recognizing the entered phrase as being indicative of a particular destination number for the caller; and

means for connecting the caller to the destination number corresponding to the entered phrase for that caller.

6. A method of providing a message service in a telecommunications system, comprising the steps of:

acknowledging an attempt by a caller to use the system;

requesting entry of an authorization code;

requesting voice entry of a password;

verifying the identity of the caller based on the caller's voice;

allowing access to the messaging service if the caller's identity is verified as being that of a valid subscriber to the messaging service;

acknowledging a request for a caller's messages; and

playing any messages stored for playback to said caller.

7. A method of providing a message service in a telecommunications system comprising the steps of:

acknowledging an attempt by a caller to use the system;

then requesting entry of an authorization code;

then requesting voice entry of a password;

then verifying the identity of the caller based on the caller's voice;

then acknowledging a request for a caller's messages; and

then playing any messages stored for playback to said caller.

8. A method of providing a message service in a telecommunications system comprising the steps of:

acknowledging an attempt by a caller to use the system;

requesting voice entry of an authorization code;

verifying the identity of the caller based on the caller's voice entry of the caller's authorization code;

allowing access to the system if the caller's identity is verified as being that of a valid subscriber to the system;

acknowledging a request for a caller's messages; and

playing any messages stored for playback to said caller.

9. A voice message service in a telecommunications system, comprising:

means for acknowledging an attempt by a caller to use the system;

means for requesting voice entry by the caller of an authorization code;

means for verifying the identity of the caller based on the caller's voice entry of the caller's authorization code;

means for allowing access to the system if the caller's identity is verified as being that of a valid subscriber to the system;

means for acknowledging a request for a caller's messages; and

means for playing any messages stored for playback to said caller.

10. The method of providing a message service in a telecommunications system as defined in Claims 4, 6, or 8, wherein said step of requesting voice entry of an authorization code is repeated at least two times upon enrollment of the caller as a subscriber to the system.

11. The method of providing voice activated dialing by callers in a telecommunications systems as defined in Claims 4 or 10, wherein said step of requesting entry of an authorization code precedes said step of requesting entry of a destination.

12. The method of providing voice activated dialing by callers in a telecommunications system as defined in Claims 4, 6, 8, 10, or 11, wherein said verifying step comprises the steps of comparing the caller's voice with a stored sample of the caller's voice.

13. The method of providing voice activated dialing by callers in a telecommunications system as defined in Claim 12, further comprising the step of updating the stored sample of the caller's voice upon successful verification of the caller's identity.

14. The telecommunications system as defined in Claim 5, wherein said phrase is caller independent.

15. The telecommunications system as defined in Claim 14, wherein said means for recognizing comprises:

means for comparing the entered phrase to a stored sample of that phrase for that caller; and

means for translating said recognized phrase into the destination number corresponding to said recognized phrase.

16. A telecommunications system as defined in Claim 5, wherein said means for authorizing access to the system comprises:

means for acknowledging an attempt by a caller to use the system;

means for requesting entry of the caller's destination;

means for requesting voice entry by the caller of an authorization code;

means for verifying the identity of the caller based on the caller's voice entry of the caller's authorization code; and

means for allowing access to the system if the caller's identity is verified as being that of a valid subscriber to the system.

17. The telecommunications system as defined in Claim 16, wherein said means for requesting voice entry of an authorization code is operable to request such entry at least two times upon enrollment of the caller as a subscriber to the system.

18. The telecommunications system as defined in Claim 9, 16, or 17, wherein said means for verifying comprises means for comparing caller's voice with a stored sample of the caller's voice.

19. The telecommunications system as defined in Claim 18, further comprising means for updating the stored sample of the caller's voice upon successful verification of the caller's identity.

FIG. 1